# EUROPEAN PATENT APPLICATION

(11) **EP 1 217 237 A1**
(43) Date of publication of application: **26.06.2002**
(21) Application number: 01850209.6
(22) Date of filing: 18.12.2001
(51) Int. Cl.: F16D 1/08, B23P 11/00, B24B 41/04, B24B 23/02

(54) **Shaft-Hub Connection**

(30) Priority: 20.12.2000 SE 0004770
(71) Applicant: SKF Autobalance Systems AB, 415 50 Göteborg (SE)
(72) Inventor: Wendt, Volker, 414 65 Göteborg (SE)
(74) Representative: Westman, P. Börje I.

(57) **Abstract**

A flange connection for interconnection of a rotary spindle (16) and a substantially ring-formed member (20) in such a manner that the ring-formed member is well centred about the axis of the spindle, wherein the spindle (16) has a surface (17) which is well centred about the axis (A) of the spindle (16), whereby the ring-formed member (20) has an axially projecting sleeve-shaped flange (24), having in its inner envelope surface an annular bulge (25) , and where the annular bulge is arranged to enclose and engage the spindle surface (17) centred about the spindle axis.

## Description

The present invention relates to a flange connection, primarily used for centring a machine element on a cylindrical surface, e.g. on a rotary shaft journal or a spindle.

In many mechanical fields and particularly at apparatuses or machines running at high speeds, it is very important that the vibrations caused by any unbalance can be reduced as much as possible in order to prevent the apparatus or machine and/or the person handling it from vibrations that can cause damage and injuries.

In recent years it has often been used automatic balancing devices for reducing such vibrations, which balancing devices are of the type having an annular housing with an internal race in which are freely movable a number of balancing bodies for positioning themselves along the race thus that the tendencies of unbalance is counteracted. For giving a good result it is very important that such an automatic balancing unit is mounted in a positively centred position around the rotational axis of the shaft journal. An application where such an automatic balancing unit is very well suited is at hand-held angle grinders, which operate at high rotational speed, and for such a tool it is very important that the tool transfers as little vibrations as possible to the person using the tool, as such vibrations will reduce the time of use for not risking injuries to the operator.

Such angle grinders have a spindle, often with a key flange, which is a part-cylindrical surface, interrupted by two opposed flat surfaces, and this key flange is particularly suited for being machined in such a manner that a true centred, mainly cylindrical surface is obtained and this surface is appropriate for supporting such an automatic balancing unit. However the mounting of the annular housing of the automatic balancing device requires that the contact surfaces on housing and the spindle part thus machined to be true cylindrical have closely matching tolerances, for contacting each other positively. If it is not succeeded to obtain the closely matching tolerance situation, the assembly of the automatic balancing device and the angle grinder is not possible without destroying one of the said members or without obtaining the centricity needed and aimed at.

The purpose of the present invention is to provide a flange connection eliminating this problem and which does not require very closely matching tolerances of the surfaces, whereas still the connection will guarantee that the detail mounted on the centric, cylindrical surface will be well centred and this is obtained in that the flange connection is given the features defined in the accompanying claim 1.

Hereinafter the invention will be further described with reference to an embodiment shown in the accompanying drawings.
Fig. 1 shows in a fragmentary view and partly in cross section a prior art flange connection prior to mounting, and
Fig. 2 is a corresponding view of the prior art connection according to Fig. 1 during mounting.
Fig. 3 is a view corresponding to Fig. 2, but showing a flange connection according to the present invention.
Fig. 4 shows schematically in a perspective fragmentary view, partly in section, a flange connection of the type shown in Fig. 3, with the flange connection incorporated in a housing of an automatic balancing device,
Fig. 5 is a cross section through a half of a somewhat modified automatic balancing device having an integrated flange for a flange connection in accordance with the invention, and
Fig. 6 is a perspective view showing partly in cross section a spindle of a angle grinder provided with an automatic balancing device mounted to the spindle by means of a flange connection in accordance with the present invention.

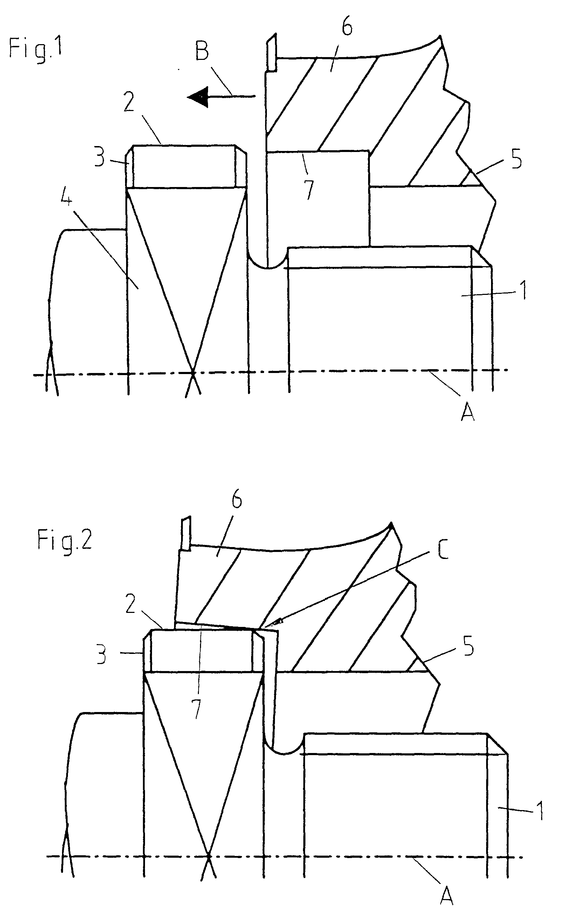

In Fig. 1 is shown a part of a spindle 1 having a centre axis A, about which has been machined an accurately centred part cylindrical surface 2, which in the embodiment illustrated is a surface of a key flange 3, e.g. of a spindle for an angle grinder, and which is substantially cylindrical but has two opposed planar surfaces 4, thereby forming a part-cylindrical component, wherein the cylindrical portions of the component are precisely centred about the axis A. According to this prior art embodiment, the detail 5 to be attached to the spindle has a flange portion 6, which has been provided with a machined cylindrical bore surface 7 intended to have a close fit relative to the cylindrical part of surface 2. The detail 5 is mounted on the surface 2 by being pushed up with a force represented by the arrow B.

However, any deviation in tolerances between the two contact surfaces 2 and 7 or a tipping movement of the detail 5, causes the flange portion 6 of the detail 5 to be distorted as illustrated at C in Fig. 2, thereby causing that the centring surfaces do not lie over each other, which results in an incorrect positioning of the detail resulting in a not precise centric location on the spindle. Alternatively the difference can be such that there is a not desired clearance between the surfaces.

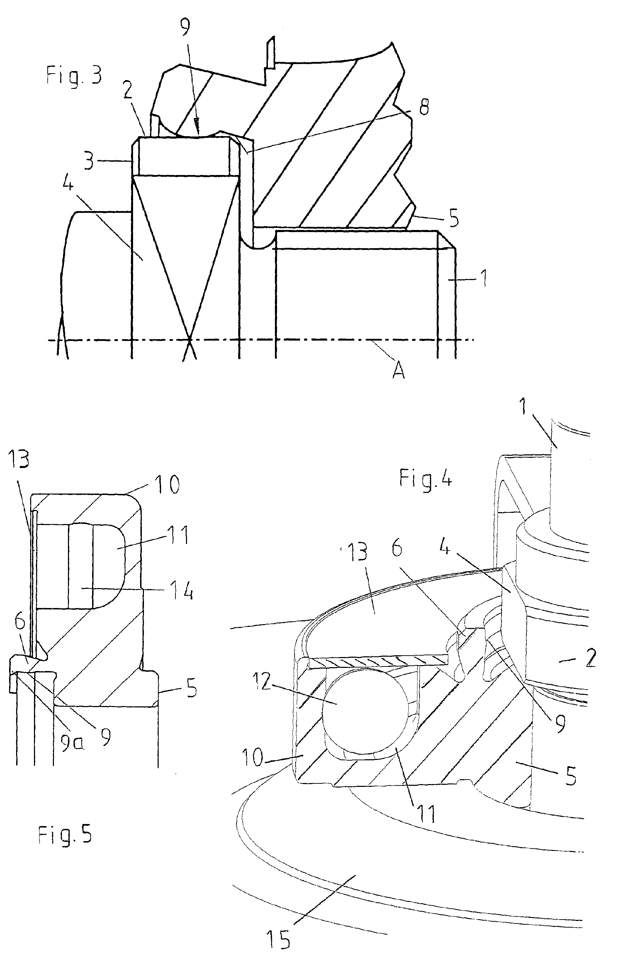

In Fig. 3 is illustrated how this problem, experienced with the prior art design according to Fig. 1 and Fig. 2, can be solved in a preferred manner. This embodiment of the flange connection according to the present invention is shown with a spindle 1 having a surface 2 on a key flange 3, that has been machined, e.g. turned and/or ground to be precisely centric about the centre axis A. A detail 5 having a projecting flange 6 shall be mounted on the key flange 3, but the bore surface of the flange 6 is not made with a cylindrical shape like the surface 7 in the prior art embodiment according to Figs. 1 and 2, but the inner bore surface 8 is instead provided with an annular bulge 9, which contacts the cylindrical, precisely centred key flange surface 2. The projecting sleeve-shaped flange is substantially thinner than the detail of which it is an integrated part. In this manner the flange portion 6 of the detail 5 has surprisingly proven itself to permit a certain degree of deformation while it at the same time always with line-contact maintains its centring contact against the flange surface 2 of the spindle 1. It has been found that the sleeve-shaped flange 6 can easily be pushed up on the centring surface 2 of the spindle flange 3 due to its flexibility, but surprisingly it has been found that the circumferential engagement between the centring surface 2 and the annular bulge 9 keeps the detail 5 well centred without giving rise to throws or other types of uneven operation.

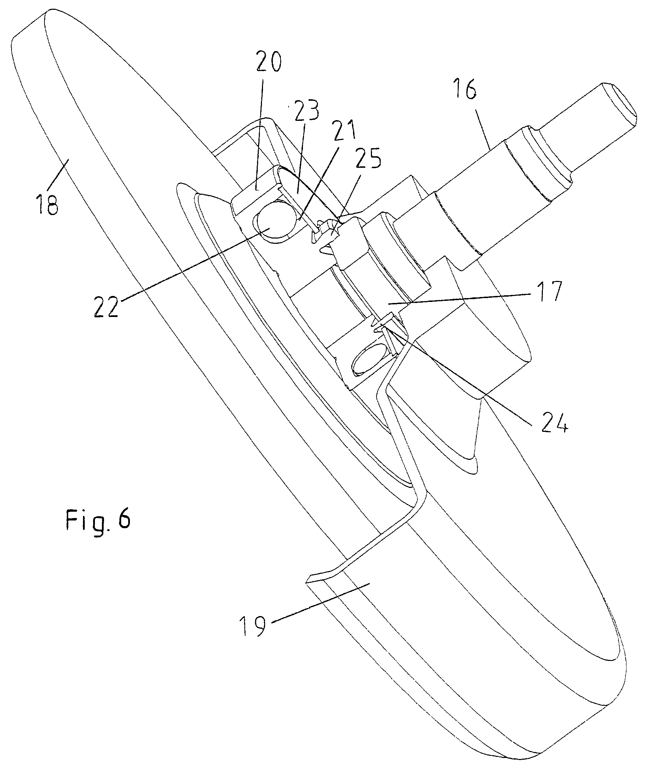

Although not being limited thereto, the flange connection according to the invention is particularly suited to be used for attaching a housing of an automatic balancing unit about the spindle of an angle grinder, and in Figs. 4 and 6, such an application is illustrated.

Fig. 4 shows in a fragmentary perspective view partly in cross section a portion of an angle grinder with a portion of a spindle 1 having a key flange 3 with an cylindrical outer envelope surface 2, which has been machined in any suitable manner to be accurately centred about the geometrical longitudinal axis of the spindle and having planar portions 4 (only one being seen). A detail 5, in this embodiment in the form of a housing 10 for an automatic balancing unit is mounted on the spindle. The housing 10 is provided with an axially projecting, sleeve-shaped flange 6, resembling to that of the embodiment according to Fig. 3. On the inner envelope surface of this sleeve-shaped flange 6 is provided an annular bulge 9, corresponding to that of the embodiment of Fig. 3, and engaging the perfectly centred, part-cylindrical outer envelope surface 2 of the key-grip flange of the spindle 1. It should also be noted, that the size of the bulge 9 in Fig. 3 for clarity reasons has been somewhat exaggerated, whereas the corresponding bulge in the embodiment of Fig. 4, is more proportional.

The automatic balancing device comprises in the housing 10 an annular space 11 in which is contained a number of freely movable balancing bodies 12 - here balls - which during rotation of the housing 10, which rotates together with the spindle, strives to take up positions in which they together out-balance any unbalance in the spindle 1 and its associated members, such as an attached grinding disc. The space is closed off by a lid 13. When the housing 10 is mounted on the spindle, the annular bulge 9 will be in contact with the surface 2 of the flange 3, which is carefully centred about the rotational axis A of the spindle 1, and the housing 10 thereby will also be perfectly centred about the axis, and this ascertains that a satisfactory automatic balancing effect will be obtained. It has proven itself that the sleeve-shaped flange 6 will give a very reliable and efficient centring of the housing 10 probably due to the flexibility of the comparatively thin sleeve-shaped flange.

Another advantage with the design as shown is the use of a part-cylindrical surface 3, i.e. with the cylinder form cut of by two opposed planar segments for the key-grip, is that the engagement between the bulge 9 and the accurately part-cylindrical surface 2 will be less rigid, whereby it will be more easy to push up the housing 10 on the spindle 1, without risking that it breaks.

Fig. 5 illustrates in cross-section a half of the integrated detail 5 and balancing device housing 10, shown in Fig. 4. From this view can also be seen an internal groove 14 in the housing, forming a track for the balancing bodies, which are not shown in this view. From this view can also be seen a fraction of a grinding disc 15 mounted on the spindle 1 of an angle grinder equipped with the balancing device. The sleeve-formed flange 6 can additionally be equipped with an edge 9a on the inner side of the flange. This edge 9a can be milled away over a width corresponding to the wrench surfaces on the flange 2, for making possible the entering of the part-cylindrical surfaces, with additional gain of form-fit to withstand torsional forces.

Fig. 6 finally shows a spindle 16 of an angle grinder, which has a portion with an at least part-cylindrical surface 17, which has been machined to be accurately centric to the longitudinal centre axis of the spindle. At one end, the spindle carries a grinding disc 18, which is partly enclosed by a casing 19. Between the grinding disc 18 and the surface 17 is provided a housing 20 of an automatic balancing unit, in which is provided an annular space 21 intended to house a number of balancing bodies 22 and to be closed off by means of a lid 23.

Integral with the housing 20 is a relatively thin-walled annular flange 24, which is sleeve-formed and projects axially from the housing. At the outer end, remote from the housing 20, the sleeve-formed flange 24 is equipped with an annular bulge 25 on its inner envelope surface. This annular bulge engages the accurately centred flange surface 17 and causes the housing 20 of the automatic balancing unit to be accurately centred about the spindle 16.

The flange connection according to the present invention hereinbefore has been described in connection to the embodiments shown in the drawings as a means for accurately centring a housing of an automatic balancing unit on the spindle of an angle grinder, but it is evident, that the same advantages and effect can be obtained also in other cases, where a substantially ring-formed member shall be accurately attached in a well centred manner to a rotary spindle.

Although the invention has been described in form of a specific embodiment illustrated in the accompanying drawings, it is of course so that the invention is not limited to this preferred embodiment, but modifications and variations are possible within the scope of the accompanying claims.

## Claims

1. A flange connection for interconnection of a rotary spindle (1,16) and a substantially ring-formed member (5,10,20) in such a manner that the ring-formed member is well centred about the axis (A) of the spindle,
**charcterized therein**
that the spindle (1, 16) has a surface (2,17) which is well centred about the axis (A) of the spindle (1,16),
that the ring-formed member (5,10,20) has an axially projecting sleeve-shaped flange (6,24), having in its inner envelope surface an annular bulge (9,25), and that the annular bulge is arranged to enclose and engage the spindle surface (2,17) centred about the spindle axis (A).

2. A flange connection as claimed in claim 1,
**charcterized therein**,
that the spindle surface (2,17) which is well centred about the axis (A) is a part-cylindrical surface, whereby the annular bulge (9,25) engages only the cylindrical portions of said surface.

3. A flange connection as claimed in claim 1 or 2,
**characterized therein**,
that the sleeve-formed flange (6,24) is an integrated part of the ring-formed member (5,10,20).

4. A flange connection as claimed in anyone of the preceding claims,
**characterized therein**,
that the ring-formed member (10,20) constitutes the housing of an automatic balancing unit, having provided in said ring-formed member an annular closed off chamber (11,21) acting as a race track for balancing bodies (12,22) provided for compensating unbalance in the spindle (1,16) and its associated elements.

5. A flange connection as claimed in claim 4,
**characterized therein**,
that the spindle (1,16) is a spindle of an angle grinder, and the housing (10,20) of the automatic balancing unit is provided between said spindle surface (2,17) which is well centred about the axis (A) and a grinding disc (15,18) attached to the spindle (1,16).

6. A flange connection as claimed in anyone of the preceding claims,
**characterized therein**,
that the bulge (9,25) has a contact surface facing and engaging the spindle surface (2,17) which is well centred about the axis (A), which has a substantially circular curvature.

7. A flange connection as claimed in anyone of the preceding claims,
**characterized therein**,
that the sleeve-formed flange (6) has an inwardly facing edge (9a) providing a form-fitting attachment means for the sleeve-formed flange (6) on the spindle flange.
